(19)

Europäisches
Patentamt
European
Patent Office
Office européen
des brevets

(11)  **EP 4 389 817 A1**

(12)  **EUROPEAN PATENT APPLICATION**

(43) Date of publication:
**26.06.2024   Bulletin 2024/26**

(21) Application number: **22214672.2**

(22) Date of filing: **19.12.2022**

(51) International Patent Classification (IPC):
**C08L 23/08** (2006.01)

(52) Cooperative Patent Classification (CPC):
(C-Sets available)
**C08L 23/0815;** C08L 2203/14; C08L 2205/02;
C08L 2205/025; C08L 2205/03; C08L 2207/06;
C08L 2207/066; C08L 2207/20          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Basell Polyolefine GmbH
50389 Wesseling (DE)**

(72) Inventors:
• **HEES, Timo
55116 Mainz (DE)**

• **MAUS, Andreas
60431 Frankfurt (DE)**
• **MEIER, Gerhardus
60320 Frankfurt/M (DE)**
• **EDERLE, Yannick
69002 Lyon (FR)**

(74) Representative: **LyondellBasell
c/o Basell Polyolefine GmbH
Industriepark Hoechst, Bldg. E413
65926 Frankfurt am Main (DE)**

(54)  **PROCESS FOR PRODUCING A BLENDED LOW DENSITY POLYETHYLENE COMPOSITION COMPRISING RECYCLED POLYMER COMPOSITIONS**

(57)    A process for producing a blended low density polyethylene composition comprising the step of blending a first component comprising one or more recycled polymer compositions and a second component comprising one or more low density polyethylene.

**EP 4 389 817 A1**

(52) Cooperative Patent Classification (CPC): (Cont.)

C-Sets
**C08L 23/0815, C08L 23/0815**

**Description**

FIELD OF THE DISCLOSURE

The present disclosure refers to a process for producing a blended low density polyethylene (LDPE) composition, wherein the blended low density polyethylene composition comprises a first component comprising one or more recycled polymer compositions. The so obtained product is particularly suited for use in foamed articles, cast films and/or blown films.

BACKGROUND OF THE DISCLOSURE

Low density polyethylene is a well-known thermoplastic with a variety of uses. For example, LDPE, especially LDPE, which is obtained by radical polymerization of ethylene, is commonly used for various applications, such as films for packaging, agricultural films, shopping bags, heavy-duty shipping sacks, foamed articles, caps and closures, tubing, pipes, automotive parts, housewares, medical applications, liners and toys.

Depending upon the specific applications, different characteristics of the polymer are required.

In particular, for foamed articles, for example foamed articles for flexible packaging and blown films, a delicate balance of molecular weight, thus of melt flow index, and melt strength is required.

In view of current market developments that seek for reduction of environmental footprint in the value chain of materials, including polymer materials, there is an ongoing drive to re-use materials, and to reduce the quantity of "new" materials that are used in the production of a variety of articles.

In field of applications of polymer materials, this translates to a desire to recycle materials and to reduce the quantity of so-called "virgin" polymer material, i.e. polymer material that is provided as new polymers obtained from polymerization processes, such as from polymerization processes of fossil materials-based monomeric materials and/or biologically derived monomers.

Thus, an advantageous source of LDPE material is presently represented by LDPE recyclate, mainly coming from recovery of post-consumer and/or industrial plastic waste.

Such LDPE recyclate materials, obtained usually by separation from waste streams and often containing significant amounts of other polyethylene components, in particular of linear low density polyethylene (LLDPE), have rather variable properties and generally require processing like treatment with radical initiators to make them suited for the desired use.

There is therefore a need for efficient processing methods allowing the utilization of certain high quantity of recyclate material, in particular in view of circular materials efficiency and environmental concerns.

SUMMARY OF THE DISCLOSURE

The present disclosure provides a process for producing a blended low density polyethylene composition, wherein the process comprises the step of blending a first component comprising one or more recycled polymer compositions and a second component comprising one or more low density polyethylene, wherein the blended low density polyethylene composition has

a) a density from 0.910 to 0.940 $g/cm^3$, preferably from 0.915 to 0.935 $g/cm^3$ determined according to ISO 1183-1:2012 at 23°C;
b) a ratio MIP/MIE from 1.8 to 6, preferably from 2 to 5, where MIP is the melt flow index at 190°C with a load of 5 kg; and MIE is the melt flow index at 190°C with a load of 2.16 kg, both determined according to ISO 1133-2:2011;
c) MIP values from 3 to 20 g/10 min, preferably from 4 to 15 g/10 min;
d) ER values from 1 to 4, preferably from 1.2 to 4, more preferably from 1.2 to 3.5;
e) a ratio MIE/ER from 0.2 to 2.8, preferably from 0.3 to 2.5;

wherein ER is calculated from

$ER = (1.781*10^{-3})*G'$
at a value of $G'' = 0.5$ kPa (5000 $dyn/cm^2$);
wherein:

G' = storage modulus
G'' = loss modulus;
both G' and G'' being measured with dynamic oscillatory shear in a plate-plate rotational rheometer at a temperature of 190°C,
and wherein the blended low density polyethylene composition comprises from 30 to 90 % by weight, in particular from 35 to 80 % by weight or from 40 to 70 % by weight, with respect to the total weight of the low density polyethylene composition, of the first component.

The so obtained low density polyethylene product has not only relatively high melt flow index values, but also a high melt strength, as shown in the Rheotens test by the high values of force F(max) required to tear the strand. It is particularly suitable for use in foamed articles and/or blown films.

In some embodiments, at least one of the following additional features applies:

- the MIP/MIE ratio of the first component and the blended low density polyethylene composition is from 0.50 to 1.80, preferably from 0.60 to 1.30, more preferably from 0.85 to 1.10;
- the MIP ratio of the blended low density polyethylene composition and the first component is from 1.5 to 15, preferably from 1.8 to 10;
- the ER ratio of the first component and the blended low density polyethylene composition is from 0.8 to 3, preferably from 1.0 to 2.5. more preferably from 1.0 to 1.7.

In some embodiments, at least one of the following additional features applies:

- the MIP/MIE ratio of the first component and the second component is from 0.50 to 2.00, preferably from 0.60 to 1.80, more preferably from 0.70 to 1.4;
- the MIP ratio of the second component and first component is from 2 to 100, preferably from 4 to 80;
- the ER ratio of the first component and the second component is from 1.5 to 10, preferably from 1.9 to 9.

In some embodiments, the recyclate fraction in the blended low density polyethylene composition makes up from 20 to 95 % by weight or 30 to 90 % by weight, preferably from 35 to 80 % by weight, more preferably from 40 to 70 % by weight, with respect to the total weight of the blended low density polyethylene composition.

In some embodiments, the first and second component are melt blended in an extruder device at a temperature of from 180 to 250°C.

In some embodiments, the first component comprises or consists of recyclate having a density of from 0.910 to 0.940 g/cm³.

In some embodiments, the process comprises the step of homogenizing the first component and the second component. This step may either be performed before melt blending the components or during melt blending.

In some embodiments, in case the step is performed before melt blending, a mixing device, such as a tumble mixer, may be provided for mixing the first and second component and thus forming a homogenous pre-cursor that is subsequently introduced into the extruder device.

In some embodiments, the first and second component are mixed and blended together without being subjected to a vis-breaking process. In particular, neither the first nor second component were prepared by vis-breaking.

In some embodiments, the extruder device comprises at least two screws arranged parallel to one another and being operated in a co-rotating manner.

In some embodiments, the second composition comprises or consists of virgin LDPE.

In some embodiments, the first component comprises one or more additional polyethylene components selected from HDPE, MDPE, LLDPE and mixtures thereof.

In some embodiments, the blended low density polyethylene composition comprises from 1 to 40 % by weight, preferably from 5 to 35 % by weight, more preferably from 8 to 30 % by weight or from 10 to 25 % by weight, with respect to the total weight of the low density polyethylene composition, of LLDPE.

In some embodiments, the blended low density polyethylene composition has at least one of the following additional features:

- MIE of 1 g/10 min or higher, in particular from 1 to 10 or from 1 to 8 g/10 min;
- Mw from 60000 to 180000 g/mol;
- a Mw/Mn ratio from 3 to 18 or from 4 to 13;
- F(max) values of 0.04 N or higher, in particular 0.04 to 2 N, more preferably from 0.05 to 0.2 N measured with a Rheotens device at 190°C with an acceleration of 2.4 mm/s².

The present disclosure further provides a blended low density polyethylene composition obtainable, in particular obtained by the process of the present disclosure.

The present disclosure further provides a manufactured article comprising the blended low density polyethylene composition of the present disclosure.

In some embodiments, the manufactured article is in the form of a foamed article or a blown film.

DETAILED DESCRIPTION OF THE DISCLOSURE

The term "low density polyethylene" is used herein to embrace, as alternatives, both a single ethylene polymer and a polyethylene composition, i.e. a composition comprising two or more ethylene polymers.

As used herein, the term "virgin" polymer means that it is a polymer, which has not been subjected to any process for production of finished articles, like fibers or sheets for thermoforming. The virgin polymer may be obtained from polymerization processes, such as from polymerization processes of fossil materials-based monomeric materials and/or biologically derived monomeric materials. Biobased polyethylenes and monomers are derived from natural products and are distinguished from polymers and monomers obtained from fossil-fuel sources. Because biobased materials are obtained from sources that may actively reduce $CO_2$ in the atmosphere or otherwise require less $CO_2$ emission during production, such materials are often regarded as "green" or renewable.

Thus, the virgin polymer has not been subjected to post-processing, except for possible pelletization, which is still considered part of the polymer production process.

The second component may comprise or consist of virgin LDPE, preferably of virgin LDPE obtained from fossil materials based monomeric materials.

As used herein, the term "recyclate" means post-consumer recycled ("PCR") polymer and/or post-industrial recycled ("PIR") polymer. PCR polymer is recyclate derived from an end product that has completed its life cycle as a consumer item and would otherwise be disposed of as waste (e.g. a polyethylene water bottle). PIR polymer recyclate is derived from plastic scrap that is generated as waste from an industrial process. PCR polyolefins include polyolefins that have been collected in commercial and residential recycling programs, including flexible packaging (cast film, blown film and BOPP film), rigid packaging, blow molded bottles, and injection molded containers.

The term "about" means the stated value plus or minus the margin of error of measurement or plus or minus 10% if no method of measurement is indicated.

As used herein, the term "comprising" has the broad standard meaning "including", "encompassing", or "containing". It includes the explicitly recited elements, and also allows the presence of other elements not recited. In addition to this broad encompassing meaning, as used herein, the term "consisting of" or "consists" may have a limited meaning. This means that any aspect or embodiment of the present application is defined as "consisting of" certain features, also includes the meaning of merely consisting of said features, whether this is explicitly stated or not. In addition, the term "consisting of" may also have the meaning "consisting essentially of". The expression "consisting essentially of" allows for elements not explicitly recited, but exclude elements that are found in the prior art or that affect a basic or novel characteristic of the disclosure.

The terms "comprise", "have", "include" and "contain" (and their variants) are openended linking verbs and allow the addition of other elements when used in a claim.

The phrase "consisting of" or "consist of" are closed and excludes all additional elements.

The phrase "consisting essentially of" excludes additional material elements but allows the inclusions of nonmaterial elements that do not substantially change the nature of the disclosure.

Hence, in general terms, the recyclate is a material deriving from an article manufacturing process. As used herein "recyclate" also encompasses "regrind" material.

Usually, through a step of separation from other polymers, such as PVC, PET or PS, two main polyolefinic fractions are obtained, namely polyethylene recyclate (including HDPE, MDPE, LDPE, and LLDPE) and polypropylene recyclate (including homopolymers, random copolymers and heterophasic copolymers). Polyethylene recyclate can be further separated to recover a portion containing LDPE in significant amounts, in particular of 35% by weight or more, with respect to the total weight.

The first component may comprise or consist of recyclate material, in particular recyclate material having a LDPE as a large fraction , i.e. recyclate LDPE. The LDPE fraction of the recycle material may be larger than 25 % by weight, preferably larger than 30 % by weight, more preferably larger than 45 % by weight, with respect to the total weight of the first component.

The first component may particularly have a density of between 0.910 to 0.940 g/cm$^3$. Preferably, the first component has a ratio MIP/MIE of 2 to 5 and/or an ER of 2 to 6.

Preferably, at least one of the following additional features applies:

- the MIP/MIE ratio of the first component and the second component is from 0.50 to 2.00, preferably from 0.60 to 1.80, more preferably from 0.70 to 1.4;
- the MIP ratio of the second component and first component is from 2 to 100, preferably from 4 to 80;
- the ER ratio of the first component and the second component is from 1.5 to 10, preferably from 1.9 to 9.

"LDPE" as used herein, means ethylene homopolymers and ethylene copolymers produced in radical polymerization.

The polymerization is generally carried out under high pressure, as hereinafter explained in detail.

Examples of LDPE copolymers include ethylene-vinyl acetate copolymers, ethylene-vinyl alcohol copolymers, ethylene-acrylate copolymers, ethylene-methacrylate copolymers, ethylene-$\alpha$-olefin copolymers and mixtures thereof.

Examples of $\alpha$-olefin comonomers in the LDPE copolymers include $C_3$-$C_{10}$ $\alpha$-olefins, such as propylene, 1-butene, 1-hexene, 1-octene and mixtures thereof.

When present, comonomers can be present in amounts up to 15% by weight, up to 10% by weight or up to 5% by weight with respect to the total weight of the copolymer. In some embodiments, the comonomers may be present in amounts ranging from 0.001 to 15% by weight, based on the total weight of the copolymer.

In general, the term "copolymer" is meant to include also polymers containing more than one kind of comonomers, such as terpolymers.

There are two basic high pressure polymerization processes for the manufacture of LDPE: autoclave and tubular.

The LDPE made by the autoclave reactor process ("autoclave LDPE") has a high concentration of long chain branches, resulting into high values of elongational hardening, and a relatively broad molecular weight distribution that make it easy to process.

The autoclave polymerization may be carried out in the presence of radical initiating agents selected from organic peroxides.

The tubular reactor process does not necessarily require the use of organic peroxides. It can be carried out by using oxygen alone as the radical initiating agent, thus allowing to prepare LDPE which is free from products of chemical degradation of organic peroxides.

The said LDPE can also be prepared with a mixed process combining both autoclave and tubular reactors.

Process operating conditions can include but are not limited to, a pressure in the range of from 70 MPa to 700 MPa, preferably from 140 to 190 MPa, and a temperature in the range of from 150°C to 500°C, preferably from 150°C to 320°C.

The polymerization gas can optionally comprise one or more chain transfer agents known in the art, such as propylene, propane and propionic aldehyde.

Such chain transfer agents are used to regulate the molecular weights.

The said processes and the resulting LDPE product are well known in the art. For instance, US patent No. 3,691,145 and US patent application NO. 2010/0076160 teach producing LDPE in a tubular reactor process.

Virgin LDPE polymers having the characteristics quoted above for the second component, are known in the art. Specific examples are the polymers commercially available with the brand names Lupolen (LyondellBasell) and Petrothene (Equistar).

Recyclate compositions having the characteristics quoted above for the first component are known in the art as well. Specific examples are polyethylene compositions commercially available with the brand name Nextfilm (Suez).

The first component, in particular the LDPE recyclate and consequently the present blended low density polyethylene composition may comprise one or more additional polyethylene components, selected in particular from HDPE (High Density Polyethylene, typically having a density from 0.940 to 0.965 g/cm$^3$), MDPE (Medium Density Polyethylene, typically having a density from 0.926 to 0.940 g/cm$^3$), LLDPE (Linear Low Density Polyethylene, typically having a density from 0.910 to 0.925 g/cm$^3$) and mixtures thereof.

These additional components may be obtained by way of polymerization processes in the presence of coordination catalysts. Said processes and the homopolymers and copolymers obtained from them are widely described in the art.

In particular it is possible to carry out the polymerization process in the presence of a Ziegler-Natta catalyst or single site catalyst.

As is well known, a Ziegler-Natta catalyst comprises the product of the reaction of an organometallic compound of group 1, 2 or 13 of the Periodic Table of Elements with a transition metal compound of groups 4 to 10 of the Periodic Table of Elements (new notation). In particular, the transition metal compound may be selected among compounds of Ti, V, Zr, Cr and Hf and is preferably supported on MgCl$_2$.

Preferred organometallic compounds are the organo-Al compounds.

The single site catalysts are known in the art and are generally selected from metallocene and non-metallocene single site catalysts.

Examples of metallocene single site catalysts are zirconocenes and hafnocenes, for instance cyclopentadienyl or indenyl complexes of zirconium or hafnium, like bis (cyclopentadienyl) zirconium dichloride, bis (indenyl) zirconium dichloride or bis (indenyl) hafnium dichloride.

Examples of non-metallocene single site catalysts are iron complex compounds preferably having a tridentate ligand.

In particular, the blended low density polyethylene composition of the present disclosure may be prepared by processing the components in an extruder device. Extruder devices may for example be extruders or continuous mixers. These extruders or mixers can be single- or two-stage machines which melt and homogenize the low density polyethylene. Examples of extruders are pin-type extruders, planetary extruders or corotating disk processors. Other possibilities are combinations of mixers with discharge screws and/or gear pumps. Preferred extruders are screw extruders and in particular multi-screw extruders, preferably twin-screw extruders. Particular preference is given to twin-screw extruders and continuous mixers with discharge elements and especially to continuous mixers with counter rotating twin rotor or to extruder devices comprising at least one co-rotating twin screw extruder. This further ensures sufficient homogenization of the components during melt blending in the extruder. Alternatively, the components may be homogenized in a mixing device, such as a tumble mixer before being fed to the extruder device. Machinery of this type is conventional in the plastic industry and is manufactured by, for example Leistritz Extrusionstechnik GmbH, Nuremberg, Germany; Coperion GmbH, Stuttgart, Germany; KraussMaffei Berstorff GmbH, Hannover, Germany; The Japan Steel Works LTD., Tokyo, Japan; Farrel Corporation, Ansonia, USA; or Kobe Steel, Ltd., Kobe, Japan. Extruder devices are further usually equipped with units for pelletizing the melt, such as underwater pelletizers.

In some embodiments, more than two components may be provided that form the blended low density polyethylene composition, wherein the components may be added in subsequent extrusion steps or together with the first and second component.

In an extruder device, the specific energy input (SEI) refers to the energy input that is mechanically applied to the melt through the rotation of the screws and which correlates to the power consumption of the motor. It can be expressed in kWh/kg.

Indicatively, the SEI value may range from 0.05 to 0.20 kWh/kg, preferably from 0.08 to 0.15 kWh/kg.

The temperatures at which the blending step is carried out is preferably low enough to avoid thermal vis-breaking, in particular equal to or lower than 250°C, more preferably lower than 240°C.

The lower limit of the temperature at which the blending step is carried out is generally equal to or higher than the melting point of the polymer material employed in such step. Preferably, the lower limit is 180°, more preferably 190°C.

Although not required, additives can be fed to the blended low density polyethylene composition. Feeding of these additives may occur before, during or after melt blending.

Such additives are common in the art. types of additives for preparing polyethylene compositions are, for example, antioxidants, melt stabilizers, light stabilizers, acid scavengers, lubricants, processing aids, antiblocking agents, slip agents, antistatic agents, antifogging agents, pigments or dyes, nucleating agents, flame retardants or fillers. It is common that several additives are added. The multiple additives can be different types of additives. It is however also possible that several representatives of one type of additives are added to the low density polyethylene. Additives of all these types are generally commercially available and are described, for example, in Hans Zweifel, Plastics Additives Handbook, 5th Edition, Munich, 2001.

As previously said, the present low density polyethylene product is particularly suited for use in applications where a substantive melt strength is required or desirable, like in particular for preparing foamed articles (for instance foamed articles for flexible packaging) or blown films. In fact it is preferably characterized by F(max) values of 0.04 N or higher, in particular 0.04 to 2 N, preferably from 0.05 to 0.2 N measured with a Rheotens device at 190°C with an acceleration of 2.4 mm/s$^2$.

Independently or in combination with said F(max) values, the present low density polyethylene product has preferably at least one of the following additional features:

- Mw from 60000 to 180000 g/mol.;
- a Mw/Mn ratio from 3 to 18 or from 4 to 13.

The foamed articles can be produced via a chemical blowing process or via a physical blowing process. Physically blown polyolefin foam is commonly produced with blowing agents such as isobutane, pentane and cyclopentane. In general, physically blown polyolefin foams have the advantage that they yield in a higher expansion and thus in a lower density compared to chemically blown polyolefin foams. The foams can be either uncrosslinked or crosslinked.

In some embodiments, foams comprising the present low density polyethylene have a density in the range of from 12 kg/m$^3$ to 60 kg/m$^3$. Such foams may be used in protective packaging for electronics, furniture, fruits, glass items, toys, among other things, or with any other article where cushioning protection from shock and/or vibration is desired. The foams may also be used in protective packaging for articles where insulation from heat is desired.

The technique of blown film (also referred to as the tubular film) extrusion is well known for the production of thin plastic films. The process involves extrusion of a molten thermoplastic resin through an annular die, followed by "bubble-like" expansion of the molten web.

EXAMPLES

The practice and advantages of the various embodiments, compositions and methods as provided herein are disclosed below in the following examples. These Examples are illustrative only, and are not intended to limit the scope of the appended claims in any manner whatsoever.

The following analytical methods were used to characterize the polymer compositions.

Melt flow index

Determined according to ISO 1133-1 2012-03 at 190°C with the specified load.

Density

Determined according to ISO 1183-1:2012 at 23°C.

Molecular Weight Distribution Determination

The determination of the means Mw and Mn and of Mw/Mn derived therefrom was carried out by high-temperature gel permeation chromatography using a method described in ISO 16014-1, -2, -4, issues of 2003. The specifics according to the mentioned ISO standards are as follows: Solvent 1,2,4-trichlorobenzene (TCB), temperature of apparatus and solutions 135°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used.

The solvent was vacuum distilled under Nitrogen and was stabilized with 0.025% by weight of 2,6-di-tert-butyl-4-methylphenol. The flowrate used was 1 ml/min, the injection was $500 \mu l$ and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany)) in the range from 580g/mol up to 11600000g/mol and additionally with Hexadecane.

The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: $k_{PS}$= 0.000121 dl/g, $\alpha_{PS}$=0.706 and for PE $k_{PE}$= 0.000406 dl/g, $\alpha_{PE}$=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively.

Complex shear viscosity $\eta_{0.02}$ (eta (0.02)) and ER

Measured at angular frequency of 0.02 rad/s and 190°C as follows.

Samples were melt-pressed for 4 min under 200 °C and 200 bar into plates of 1mm thickness. Disc specimens of a diameter of 25 mm were stamped and inserted in the rheometer, which was pre-heated at 190 °C. The measurement can be performed using any rotational rheometer commercially available. Here the Anton Paar MCR 300 was utilized, with a plate-plate geometry. A so-called frequency-sweep is performed (after 4 min of annealing the sample at the measurement temperature) at T = 190 °C, under constant strain-amplitude of 5%, measuring and analyzing the stress response of the material in the range of excitation frequencies $\omega$ from 628 to 0.02 rad/s. The standardized basic software is utilized to calculate the rheological properties, i.e. the storage-modulus, G', the loss-modulus, G", the phase lag $\delta$ (=arctan(G7 G')) and the complex viscosity, $\eta^*$, as a function of the applied frequency, namely $\eta^* (\omega) = [G' (\omega)2 + G" (\omega)2]^{1/2} /\omega$. The value of the latter at an applied frequency $\omega$ of 0.02 rad/s is the $\eta_{0.02}$.

ER is determined by the method of R. Shroff and H. Mavridis, "New Measures of Polydispersity from Rheological Data on Polymer Melts," J. Applied Polymer Science 57 (1995) 1605 (see also U.S. Pat. No. 5,534,472 at Column 10, lines 20-30). It is calculated from:

$$ER = (1.781*10^{-3})*G'$$

at a value of G"=5,000 dyn/cm$^2$.

As those skilled in the art will recognize, when the lowest G" value is greater than 5,000 dyn/cm$^2$, the determination of ER involves extrapolation. The ER values calculated then will depend on the degree on nonlinearity in the log G' versus log G" plot. The temperature, plate diameter and frequency range are selected such that, within the resolution of the rheometer, the lowest G" value is close to or less than 5,000 dyn/cm$^2$.

Comonomer content

The comonomer content was determined by means of IR in accordance with ASTM D 6248 98, using an FT-IR spectrometer Tensor 27 from Bruker.

Melt strength

Melt strength of a polymer is a parameter in melt processing operations where stretching or drawing is involved at one or more stages in the process. It depends on molecular parameters like e.g. molecular weight, molecular weight distribution and/or polymer branches. The test device measures the extensional properties of polymer melts by drawing a vertical melt strand under constant force in the Rheotens spinline, which is located underneath the capillary die, at either constant pull-off speed or with a linear accelerating velocity.

Melt Strength analysis was carried out at 190°C on a Göttfert Rheotester 1000 (12 mm Barrel diameter, Capillary die LID = 20/2), equipped with a RHEOTENS 71.97 device. The RHEOTENS consists of two upper and two lower driven, counter rotating wheels that are connected to a very sensitive balance-system. The vertical gap between the wheels was 0.3 mm. After 10 min. melting time, the polymer was extruded with a shear rate of 50 1/s. The polymer strand leaves the capillary die and the die-exit velocity $v_0$ is recorded. At a strand length of 74 mm the upper two wheels pull the melt strand downwards with an acceleration of 2.4 mm/s$^2$ and the velocity v is recorded (the lower two wheels are only for additionally stabilizing the strand during drawdown). The drawdown ratio $\lambda$ = v/$v_0$ at break, the velocity at break, and the force at break of the melt strand (F(max) = Melt Strength) are recorded.

Example 1

As first component, a LDPE recyclate was used. The properties of the recyclate are reported in Table 1, where it is identified as "R1"

The commercial grade *Lupolen* 1800S, sold by LyondellBasell Industries, was used as second component. *Lupolen* being a trademark owned and/or used by the LyondellBasell family of companies and being registered in the U.S. Patent and Trademark Office.

*Lupolen* 1800S is a virgin LDPE, having the properties reported in Table 1, where it is identified as "LP 1800S".

The low density polyethylene product of Example 1 was obtained by extruding the first and second component in an extruder.

The machine parameters were:

Rotation speed: 300 rpm;
Throughput: 30 kg/h;
Temperatures:

Zone 1: 200°C, Zone 2: 220°C, Zone 3-10: 240°C, Die: 240°C;
SEI: 0.092 kWh/kg.

As those skilled in the art will know different ways to calculate the specific energy input SEI. SEI can be calculated by division of the motor power by the material flow. Motor power is equal to the torque multiplied with the angular velocity. The equation for the SEI is as follows:

$$SEI = \frac{(2 \cdot \pi \cdot n \cdot M_D)}{\dot{m}}.$$

Here, 2*$\pi$*n represents the angular velocity $\omega$, $M_D$ stands for the torque and m represents the material flow. When the torque of the motor cannot be directly measured, SEI can also be calculated approximately according to the following equation using the maximum and the actual current of the motor.

$$SEI = P_{max} * \frac{n_{actual}}{n_{max}} * \frac{I_{actual}}{I_{max}} * \frac{\eta_{transmission}}{\dot{m}}$$

Here, "n" represents the speed of the screws, "I" stands for the current and "$\eta_{transmission}$" is the efficiency of the transmission.

The properties of the so obtained blended low density polyethylene composition are reported in Table 1, wherein it is identified as "Blend1". The relative amounts in the blend were 50% by weight of the first component and 50% by weight of the second component with respect to the total weight of the blended low density polyethylene composition.

As a comparison, the properties of a virgin LDPE composition, namely commercial grade *Lupolen* 2420H, which is in general suitable for foaming applications and/or blown films is listed in Table 1, wherein it is identified as "LP 2420H".

Table 1

|  | R1 | LP 18005 | Blend1 | LP 2420H |
|---|---|---|---|---|
| MIP [g/10 min] | 0.97 | 66.3 | 7.06 | 7.74 |
| MIE [g/10 min] | 0.23 | 19.1 | 1.74 | 1.93 |
| Density [g/cm$^3$] | 0.928 | 0.917 | 0.925 | 0.922 |
| Mw [g/mol] | 195799 | 74622 | 134878 | 109464 |
| Mw/Mn | 10.6 | 7.5 | 10.5 | 7.1 |
| MIP/MIE | 4.2 | 3.5 | 4.1 | 4.0 |
| ER | 4.2 | 1.1 | 2.8 | 1.9 |
| MIE/ER | 0.06 | 17.69 | 0.615 | 1.01 |
| F(max) [N] | 0.177 | n.a. | 0.090 | 0.088 |

Example 2 and Example 3

For Examples 2 and 3, a different LDPE recyclate was used, as compared to Example 1. The properties of the recyclate are reported in Table 2, where it is identified as "R2"

The commercial grade *Lupolen* 1800S, sold by LyondellBasell Industries, was used as second component, like in Example 1.

The low density polyethylene product of Example 2 and Example 3 were obtained by extruding the first and second component in an extruder.

The machine parameters were:

Rotation speed: 300 rpm;
Throughput: 30 kg/h;
Temperatures:

Zone 1: 200°C, Zone 2: 220°C, Zone 3-10: 240°C, Die: 240°C;
SEI: 0.092 kWh/kg for Example 2 and 0.093 kWh/kg for Example 3.

The properties of the so obtained blended low density polyethylene composition are reported in Table 2, wherein it is identified as "Blend2" and "Blend3", respectively. The relative amounts in the blend were 50% by weight of the first component and 50% by weight of the second component with respect to the total weight of the blended low density polyethylene composition for "Blend2" and 60% by weight of the first component and 40% by weight of the second component with respect to the total weight of the blended low density polyethylene composition for "Blend3".

Table 2

|  | R2 | LP 18005 | Blend2 | Blend3 |
|---|---|---|---|---|
| MIP [g/10 min] | 2.84 | 66.3 | 8.83 | 6.42 |
| MIE [g/10 min] | 0.79 | 19.1 | 2.36 | 1.71 |
| Density [g/cm$^3$] | 0.928 | 0.917 | 0.923 | 0.924 |
| Mw [g/mol] | 163257 | 74622 | 108165 | 123250 |
| Mw/Mn | 8.1 | 7.5 | 8.1 | 8.8 |

(continued)

|  | R2 | LP 18005 | Blend2 | Blend3 |
|---|---|---|---|---|
| MIP/MIE | 3.6 | 3.5 | 3.7 | 3.8 |
| ER | 2.9 | 1.1 | 2.3 | 2.5 |
| MIE/ER | 0.272 | 17.69 | 1.026 | 0.679 |
| F(max) [N] | 0.122 | n.a. | 0.072 | 0.082 |

Example 4

For Example 4, the first component is identical to the first component of Example 2 and Example 3.

However, for the second component the commercial grade *Lupolen* 2420K, sold by LyondellBasell Industries, was used.

*Lupolen* 2420K is a virgin LDPE, having the properties reported in Table 3, where it is identified as "LP 2420K".

The low density polyethylene product of Example 4 was obtained by extruding the first and second component in an extruder.

The machine parameters were:

Rotation speed: 300 rpm;
Throughput: 30 kg/h;
Temperatures:

Zone 1: 200°C, Zone 2: 220°C, Zone 3-10: 240°C, Die: 240°C;
SEI: 0.081 kWh/kg.

The properties of the so obtained blended low density polyethylene composition are reported in Table 1, wherein it is identified as "Blend4". The relative amounts in the blend were 30% by weight of the first component and 70% by weight of the second component with respect to the total weight of the blended low density polyethylene composition.

Table 3

|  | R2 | LP 2420K | Blend4 |
|---|---|---|---|
| MIP [g/10 min] | 2.84 | 14.37 | 6.53 |
| MIE [g/10 min] | 0.79 | 3.53 | 1.65 |
| Density [g/cm$^3$] | 0.928 | 0.923 | 0.925 |
| Mw [g/mol] | 163257 | 97540 | 110140 |
| Mw/Mn | 8.1 | 7.8 | 7.8 |
| MIP/MIE | 3.6 | 4.1 | 4.0 |
| ER | 2.9 | 1.4 | 2.1 |
| MIE/ER | 0.272 | 2.451 | 0.771 |
| F(max) [N] | 0.122 | 0.038 | 0.084 |

Tables 1 to 3 show, that by blending LDPE recyclate material with a virgin LDPE, which themselves are not used for foaming applications, low density polyethylene composition can be produced, which has similar properties as a commercial grade low density polyethylene composition are adapted for foaming applications. Thus, a blended low density polyethylene material can be produced having a high amount of recyclate material. Furthermore, it has been found that "Blend" comprises about 25 % by weight of LLDPE, relative to the total weight of the blended low density polyethylene composition. LLDPE is usually not used for such foaming applications. However, it has surprisingly found that the blended composition may comprise a relative high amount of LLDPE and still be suitable for foaming applications.

**Claims**

1. A process for producing a blended low density polyethylene composition, wherein the process comprises the step of blending a first component comprising one or more recycled polymer compositions and a second component comprising one or more low density polyethylene, wherein the blended low density polyethylene composition has

   a) a density from 0.910 to 0.940 g/cm$^3$, preferably from 0.915 to 0.935 g/cm$^3$ determined according to ISO 1183-1:2012 at 23°C;
   b) a ratio MIP/MIE from 1.8 to 6, preferably from 2 to 5, where MIP is the melt flow index at 190°C with a load of 5 kg; and MIE is the melt flow index at 190°C with a load of 2.16 kg, both determined according to ISO 1133-2:2011;
   c) MIP values from 3 to 20 g/10 min, preferably from 4 to 15 g/10 min;
   d) ER values from 1 to 4, preferably from 1.2 to 4, more preferably from 1.2 to 3.5;
   e) a ratio MIE/ER from 0.2 to 2.8, preferably from 0.3 to 2.5;
   wherein ER is calculated from

$$ER = (1.781*10^{-3})*G'$$

   at a value of G" = 0.5 kPa (5000 dyn/cm$^2$);
   wherein:

   G' = storage modulus
   G" = loss modulus;

   both G' and G" being measured with dynamic oscillatory shear in a plate-plate rotational rheometer at a temperature of 190°C,
   and wherein the blended low density polyethylene composition comprises from 30 to 90 % by weight, in particular from 35 to 80 % by weight or from 40 to 70 % by weight, with respect to the total weight of the blended low density polyethylene composition, of the first component.

2. The process of claim 1, wherein at least one of the following additional features applies:

   - the MIP/MIE ratio of the first component and the blended low density polyethylene composition is from 0.50 to 1.80, preferably from 0.60 to 1.30;
   - the MIP ratio of the blended low density polyethylene composition and the first component is from 1.5 to 15, preferably from 1.8 to 10;
   - the ER ratio of the first component and the blended low density polyethylene composition is from 0.8 to 3, preferably from 1.0 to 2.5.

3. The process of claim 1 or 2, wherein at least one of the following additional features applies:

   - the MIP/MIE ratio of the first component and the second component is from 0.50 to 2.00, preferably from 0.60 to 1.80;
   - the MIP ratio of the second component and first component is from 2 to 100, preferably from 4 to 80;
   - the ER ratio of the first component and the second component is from 1.5 to 10, preferably from 1.9 to 9.

4. The process of any one of claims 1 to 3, wherein the blended low density polyethylene composition comprises a fraction of recyclate material of between 30 to 90 % by weight, in particular from 35 to 80 % by weight or from 40 to 70 % by weight, with respect to the total weight of the blended low density polyethylene composition.

5. The process of any one of claims 1 to 4, wherein the first and second component are melt blended in an extruder device at a temperature of from 180 to 250°C, preferably of from 190 to 240°C.

6. The process of claim 5, wherein the process further comprises the step of homogenizing the first component and the second component before or during melt blending.

7. The process of any one of claims 1 to 6, wherein the second component comprises or consists of virgin LDPE.

8. The process of any one of claims 1 to 7, wherein the first component comprises one or more additional polyethylene components selected from HDPE, MDPE, LLDPE and mixtures thereof.

9. The process of any one of claims 1 to 8, wherein the blended low density polyethylene composition comprises from 1 to 40 % by weight, preferably from 5 to 35 % by weight, more preferably from 8 to 30 % by weight or from 10 to 25 % by weight, with respect to the total weight of the low density polyethylene composition, of LLDPE

10. The process of any one of claims 1 to 9, wherein the blended low density polyethylene composition has at least one of the following additional features:

    - MIE of 1 g/10 min or higher, in particular from 1 to 10 or from 1 to 8 g/10 min;
    - Mw from 60000 to 180000 g/mol;
    - a Mw/Mn ratio from 3 to 18 or from 4 to 13;
    - F(max) values of 0.04 N or higher, in particular 0.04 to 2 N, preferably from 0.05 to 0.2 N, measured with a Rheotens device at 190°C with an acceleration of 2.4 mm/s$^2$.

11. A blended low density polyethylene composition obtainable by the process of any one of claims 1 to 10.

12. A manufactured article comprising the blended low density polyethylene composition of claim 11.

13. The manufactured article of claim 12, wherein the manufactured article is in the form of a foamed article, a cast film or a blown film.

Europäisches
Patentamt

European
Patent Office

Office européen
des brevets

# EUROPEAN SEARCH REPORT

Application Number

EP 22 21 4672

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 838 984 A1 (BOREALIS AG [AT]) 23 June 2021 (2021-06-23) * example 8; tables 1,2 * | 1,5-7, 11-13 | INV. C08L23/08 |
| X | WO 2021/122299 A1 (BOREALIS AG [AT]) 24 June 2021 (2021-06-24) | 1,4-7, 11-13 | |
| A | * examples IE11,IE12 * | 2,3,8-10 | |
| E | WO 2023/057554 A1 (BOREALIS AG [AT]) 13 April 2023 (2023-04-13) * examples IE1,IE7 * | 1-13 | |
| E | WO 2023/057480 A1 (BOREALIS AG [AT]) 13 April 2023 (2023-04-13) * examples IE2,IE3,IE4 * | 1-13 | |
| E | WO 2023/057478 A1 (BOREALIS AG [AT]) 13 April 2023 (2023-04-13) * example IE2 * | 1-13 | |
| E | WO 2023/057482 A1 (BOREALIS AG [AT]) 13 April 2023 (2023-04-13) * the whole document * | 1-13 | **TECHNICAL FIELDS SEARCHED (IPC)** C08L |

The present search report has been drawn up for all claims

| Place of search | Date of completion of the search | Examiner |
|---|---|---|
| Munich | 9 June 2023 | Balmer, J |

EPO FORM 1503 03.82 (P04C01)

## ANNEX TO THE EUROPEAN SEARCH REPORT
## ON EUROPEAN PATENT APPLICATION NO.

EP 22 21 4672

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2023

| Patent document cited in search report | | Publication date | Patent family member(s) | | Publication date |
|---|---|---|---|---|---|
| EP 3838984 | A1 | 23-06-2021 | AU 2020407301 A1 | | 02-06-2022 |
| | | | CN 114787268 A | | 22-07-2022 |
| | | | EP 3838984 A1 | | 23-06-2021 |
| | | | EP 4077534 A1 | | 26-10-2022 |
| | | | US 2023016624 A1 | | 19-01-2023 |
| | | | WO 2021123410 A1 | | 24-06-2021 |
| WO 2021122299 | A1 | 24-06-2021 | BR 112022011747 A2 | | 13-09-2022 |
| | | | CN 114829481 A | | 29-07-2022 |
| | | | EP 4077531 A1 | | 26-10-2022 |
| | | | KR 20220117909 A | | 24-08-2022 |
| | | | TW 202126754 A | | 16-07-2021 |
| | | | US 2023114045 A1 | | 13-04-2023 |
| | | | WO 2021122299 A1 | | 24-06-2021 |
| WO 2023057554 | A1 | 13-04-2023 | NONE | | |
| WO 2023057480 | A1 | 13-04-2023 | EP 4163333 A1 | | 12-04-2023 |
| | | | WO 2023057480 A1 | | 13-04-2023 |
| WO 2023057478 | A1 | 13-04-2023 | EP 4163332 A1 | | 12-04-2023 |
| | | | WO 2023057478 A1 | | 13-04-2023 |
| WO 2023057482 | A1 | 13-04-2023 | EP 4163335 A1 | | 12-04-2023 |
| | | | WO 2023057482 A1 | | 13-04-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3691145 A
- US 20100076160 A
- US 5534472 A

**Non-patent literature cited in the description**

- **HANS ZWEIFEL.** Plastics Additives Handbook. 2001
- **BENOIT H. ; REMPP P. ; GRUBISIC Z.** *J. Polymer Sci., Phys. Ed.,* 1967, vol. 5, 753
- **R. SHROFF ; H. MAVRIDIS.** New Measures of Polydispersity from Rheological Data on Polymer Melts. *J. Applied Polymer Science,* 1995, vol. 57, 1605